# EUROPEAN PATENT APPLICATION

(11) **EP 4 826 290 A1**
(43) Date of publication of application: **21.10.2026**
(21) Application number: 26160912.7
(22) Date of filing: 26.02.2026
(51) Int. Cl.: F21V 8/00

(54) **LIGHT GUIDE PLATE, PLANAR ILLUMINATION DEVICE, AND METHOD FOR MANUFACTURING LIGHT GUIDE PLATE**

(30) Priority: 15.04.2025 JP 2025066869
(71) Applicant: Minebea Mitsumi Inc., Kitasaku-gun, Nagano 3890293 (JP)
(72) Inventor: ISHIKAWA, Satoshi, Kitasaku-gun, Nagano 389-0293 (JP); MATSUURA, Shigeyuki, Kitasaku-gun, Nagano 389-0293 (JP); FURUTA, Makoto, Kitasaku-gun, Nagano 389-0293 (JP); HIRAI, Takanari, Kitasaku-gun, Nagano 389-0293 (JP)
(74) Representative: Winter, Brandl - Partnerschaft mbB

(57) **Abstract**

A light guide plate (4) has a main surface (13) as a light exit surface, and a side surface (11) as a light entrance surface. The side surface (11) includes regions (14) aligned in the width direction (X). When a virtual plane is defined as a reference plane (R1), a surface (12) of each region (14) is curved or inclined so as to approach the reference plane (R1) as the surface (12) approaches the center of the side surface (11) in the width direction (X). The regions (14) include a first region (14A) and a second region (14B). The second region is adjacent to the first region (14A) at a center side of the side surface (11). The second region (14B) is offset from the reference plane (R1) toward the inside of the light guide plate (4) so as to form a step (15) with respect to the first region (14A).

## Description

### CROSS-REFERENCE TO RELATED APPLICATIONS

This application claims the benefit of priority to Japanese Patent Application Number 2025-066869 filed on April 15, 2025. The entire contents of the above-identified application are hereby incorporated by reference.

### TECHNICAL FIELD

The disclosure relates to a light guide plate, a planar illumination device, and a method for manufacturing a light guide plate.

### BACKGROUND

Planar illumination devices are often used as backlights for liquid crystal panels and the like. As an example, JP 2017-212149 A discloses an edge-light type planar illumination device. In this device, light enters from a side surface of a light guide plate and emits from a main surface of the light guide plate facing in a thickness direction.

### SUMMARY

The light guide plate is manufactured by injection molding using a transparent resin such as polycarbonate as a material. During injection molding, pressure is applied to the molten resin to fill the mold. The resin injected into the mold fills the internal space of the mold and is then cooled. Since sufficient pressure is applied to the resin when filling the mold, a light guide plate having a desired shape can be manufactured.

However, the density of the molten resin that has flowed into the corner of the mold may be slightly lower than the density of the molten resin around the corner. At this time, although very slight, the difference in density causes the degree of shrinkage of the molten resin during cooling to increase in the parts that have flowed to the corners of the mold. As a result, the side surfaces of the light guide plate formed by injection molding have a shape that bulges slightly at the center.

On the other hand, the light source of the edge-light type planar illumination device includes a plurality of light emitting elements arranged along the direction of the side surface of the light guide plate. When the light guide plate having the above-described shape is employed in this planar illumination device, an interval between the side surface of the light guide plate and the light source varies for each light emitting element, and an optical coupling rate between the two also varies for each light emitting element. Therefore, brightness unevenness on the main surface of the light guide plate is likely to become apparent.

An object of the disclosure is to provide a light guide plate, a planar illumination device, and a method for manufacturing a light guide plate, which are capable of reducing brightness unevenness that occurs in a planar illumination device.

A light guide plate according to a first aspect of the disclosure has a main surface serving as a light exit surface facing in a thickness direction, and a side surface serving as a light entrance surface, the light entrance surface being orthogonal to the main surface and extending in a width direction. The side surface includes a plurality of regions aligned in the width direction. When a virtual plane extending in the width direction and the thickness direction and being opposed to the side surface outside the light guide plate is defined as a reference plane, a surface of each of the regions is curved or inclined in a manner approaching the reference plane as the surface approaches a center of the side surface in the width direction. When one of the plurality of regions is defined as a first region and one of the plurality of regions being adjacent to the first region at a center side of the side surface is defined as a second region, the second region is offset from the reference plane toward an inside of the light guide plate in a manner forming a step with respect to the first region.

A planar illumination device according to a second aspect of the disclosure includes the light guide plate according to the first aspect, and a light source including a plurality of light emitting elements, the plurality of light emitting elements having a light emitting surface at the reference plane and being disposed at intervals in the width direction.

A method according to a third aspect of the disclosure is a method for manufacturing a light guide plate having a main surface serving as a light exit surface facing in a thickness direction, and a side surface serving as a light entrance surface, the light entrance surface being orthogonal to the main surface and extending in a width direction and includes performing injection molding by using a mold provided with an inner surface forming the side surface. The inner surface includes a plurality of regions arranged in the width direction. When one of the plurality of regions is defined as a first region and one of the plurality of regions adjacent to the first region at a center side of the inner surface in the width direction is defined as a second region, the second region is offset toward an inside of the mold relative to the first region in a manner forming a step between the second region and the first region.

According to the disclosure, it is possible to provide a light guide plate, a planar illumination device, and a method for manufacturing a light guide plate, which are capable of reducing brightness unevenness that occurs in a planar illumination device.

### BRIEF DESCRIPTION OF DRAWINGS

FIG. 1 is a perspective view of a planar illumination device according to a first embodiment.
FIG. 2 is a cross-sectional view taken along line A-A in FIG. 1.
FIG. 3 is a front view of a light guide plate according to the first embodiment.
FIG. 4 is a diagram illustrating relative positions of a side surface of the light guide plate and a light source.
FIG. 5 is a diagram illustrating a shape of a side surface and a positional relationship of each portion with respect to a reference plane.
FIG. 6 is a front view of an example of a mold used in a manufacturing method according to a second embodiment.
FIG. 7A is a diagram illustrating an example of a step of injection molding using the mold illustrated in FIG. 6.
FIG. 7B is a diagram illustrating an example of a step of injection molding using the mold illustrated in FIG. 6.
FIG. 7C is a diagram illustrating an example of a step of injection molding using the mold illustrated in FIG. 6.
FIG. 7D is a diagram illustrating an example of a step of injection molding using the mold illustrated in FIG. 6.

### DESCRIPTION OF EMBODIMENTS

Several embodiments will be described below with reference to the drawings. In the drawings, identical elements are designated by the same reference numerals, and redundant description will be omitted. For convenience of description, an X direction, a Y direction, and a Z direction that are orthogonal to each other are defined. The X direction, the Y direction, and the Z direction are a width direction, a depth direction, and a thickness direction, respectively, of a planar illumination device and a light guide plate, which will be described later.

### First Embodiment

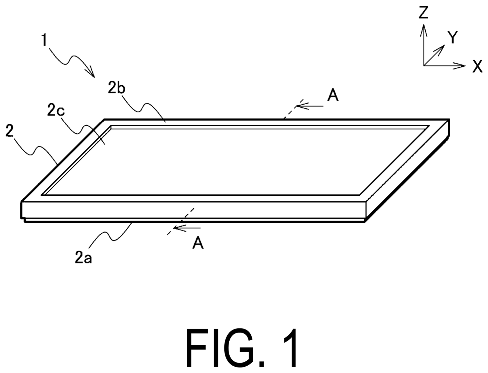

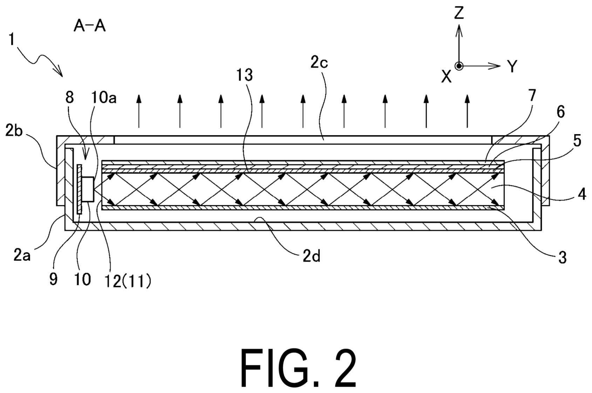

FIG. 1 is a perspective view of a planar illumination device 1 according to a first embodiment. FIG. 2 is a cross-sectional view taken along line A-A in FIG. 1. As illustrated in FIG. 1, the planar illumination device 1 includes a housing 2 that is, for example, rectangular when viewed from the front and has a substantially plate shape with a thickness in the Z direction.

As illustrated in FIG. 2, the housing 2 includes a bottom frame 2a that accommodates a light guide plate 4 (to be described later) and a top frame 2b that covers an opening of the bottom frame 2a. The top frame 2b is provided with a window part 2c, and light emitted from a main surface 13 of the light guide plate 4 is emitted from this window part 2c via the plurality of optical sheets 5, 6, and 7. The housing 2 is made of, for example, a well-known metal.

As illustrated in FIG. 2, the planar illumination device 1 includes a reflector 3, the light guide plate 4, and the optical sheets 5, 6, and 7. These are stacked in the Z direction in the order shown, for example, at a bottom surface 2d of the bottom frame 2a.

The reflector 3 is a plate-, sheet-, or film-shaped member having a reflective surface. The reflector 3 reflects leaked light emitted from the light guide plate 4 toward the bottom surface 2d back to the light guide plate 4.

The light guide plate 4 is a plate-shaped member made of a transparent resin such as polycarbonate or acrylic. The light guide plate 4 has a side surface 12 serving as a light entrance surface and a main surface 13 serving as a light exit surface. Light emitted from a light source 8 (indicated by the arrow in the drawing) enters the side surface 12, is repeatedly reflected inside the light guide plate 4, and is then emitted from the main surface 13. The light guide plate 4 will be described in detail later. The light entrance surface is not limited to only the side surface 12 (one side surface). For example, the side surface 12 and a side surface 11 that is opposed to the side surface 12 (two side surfaces) may be used as the light entrance surface according to the disclosure.

The optical sheet 5 is a so-called diffuser that uniformly scatters the light emitted from the main surface 13. The optical sheets 6 and 7 are prism sheets (so-called brightness enhancement films) that deflect the light scattered by the optical sheet 5 in the Z direction by reflection and/or refraction. The optical sheet 7 may further have a function of transmitting light in a predetermined polarization state. In this case, for example, a dual brightness enhancement film (D-BEF) can be employed as the optical sheet 7. The number of optical sheets disposed at the light emitting surface side of the light guide plate 4 is not limited to three.

The planar illumination device 1 further includes a light source 8. The light source 8 includes a substrate 9 and a plurality of light emitting elements 10 fixed to the substrate. The substrate 9 is, for example, a flexible printed circuit board. The plurality of light emitting elements 10 are disposed at intervals in the X direction and emit light toward the side surface 12 of the light guide plate. That is, a light emitting surface 10a of each light emitting element 10 is opposed to the side surface 12 in the Y direction. The light emitting element 10 is, for example, a light emitting diode (LED). In this case, the LED may be either front-emitting or side-emitting.

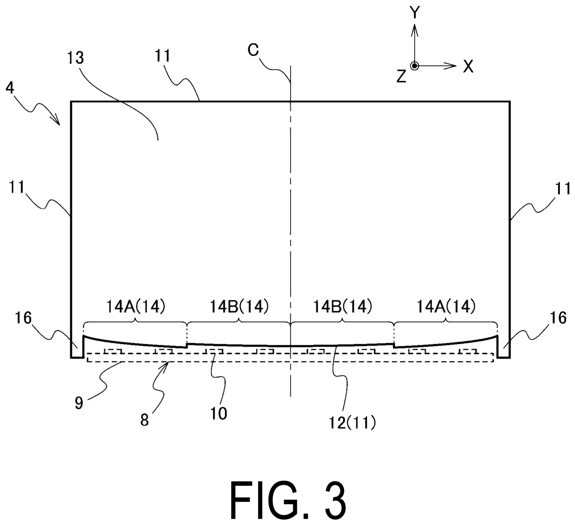

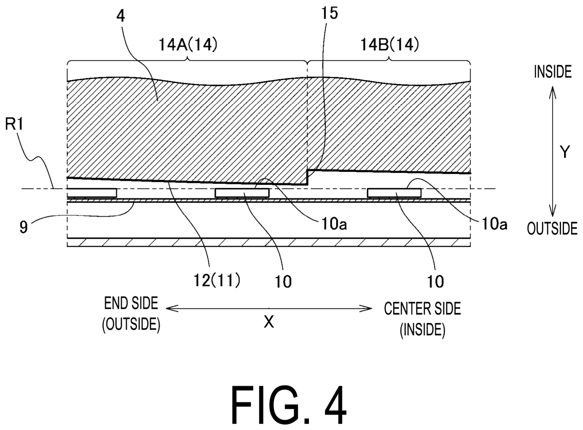

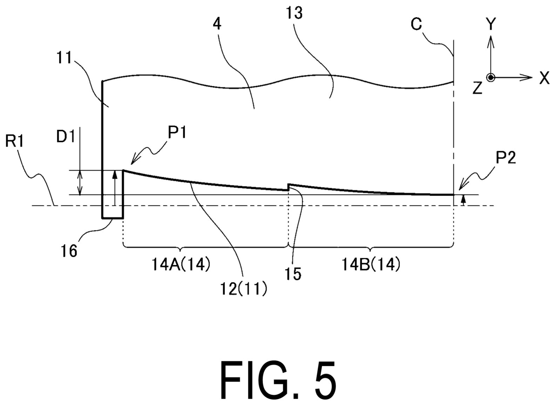

Next, the light guide plate 4 will be described in detail. FIG. 3 is a front view of the light guide plate 4. For convenience of description, the light source 8 is also shown by a dotted line in FIG. 3. FIG. 4 is a diagram illustrating the relative positions of the side surface 12 of the light guide plate 4 and the light source 8. FIG. 5 is a diagram illustrating the shape of the side surface 12 and the positional relationship of each portion with respect to a reference plane R1.

As illustrated in FIG. 3, the light guide plate 4 is a plate-shaped member that is substantially rectangular when viewed in a direction parallel to the Z direction. As described above, the light guide plate 4 is made of a transparent resin such as polycarbonate or acrylic. The light guide plate 4 has four side surfaces 11 extending in the X direction or the Y direction. These side surfaces 11 are orthogonal to the main surface 13 facing in the Z direction.

One side surface 12 of the two side surfaces 11 extending in the X direction functions as a light entrance surface for light from the light source 8. Therefore, the light emitting element 10 of the light source 8 is opposed to the side surface 12. At least one of the other three side surfaces 11 may be provided with a reflective layer (not illustrated).

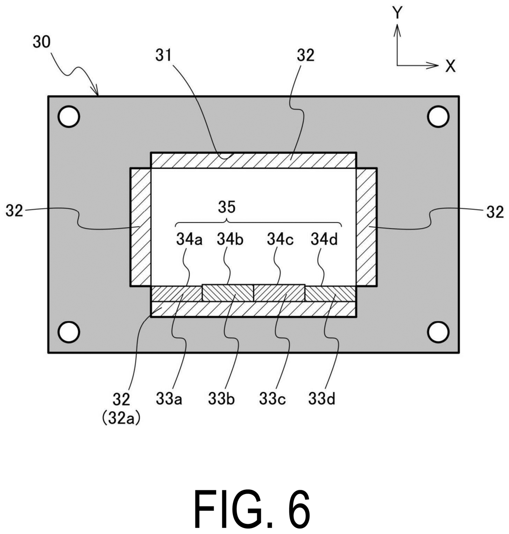

A large number of minute prisms (microprisms, not illustrated) are formed at the side surface 12 (the surface of each region 14, which will be described later) serving as a light entrance surface. The minute prisms are, for example, optical elements that extend linearly along the Z direction (thickness direction) of the light guide plate 4 and have an arc-shaped cross section. The plurality of minute prisms are formed, for example, continuously or at intervals along the X direction (width direction). Generally, the light emitting element 10 such as an LED has a specific directivity angle, and the intensity of the emitted light tends to increase as the emission angle decreases. Such dependency of the intensity distribution on the emission angle contributes to the final brightness unevenness. The prisms formed at the side surfaces reduce this emission angle dependency. The light guide plate 4 is manufactured by injection molding. These minute prisms are formed by transferring a mold 30 (see FIG. 6) used in injection molding.

As illustrated in FIG. 3, the side surface 12 includes a plurality of regions 14 aligned in the X direction. In other words, the side surface 12 is divided into these plurality of regions. The plurality of regions 14 are disposed symmetrically with respect to a center line C of the light guide plate 4 extending in the Y direction, for example. As illustrated in FIG. 4, the surface of each region 14 is curved or inclined so as to approach the reference plane R1 as the surface approaches the center of the side surface 12 in the X direction. As illustrated in FIG. 4, the reference plane R1 is a virtual plane that extends in the X direction and the Z direction and is opposed to the side surface 12 at the outside of the light guide plate 4 in the Y direction. For example, the front surface (light emitting surface 10a) of the light emitting element 10 is located at this reference plane R1.

The side surface 12 may also be provided with a pair of protruding parts 16 and 16. The protruding parts 16 are located at both sides of the group of the plurality of regions 14 in the X direction and protrude from the side surface 12 along the Y direction. The pair of protruding parts 16 and 16 define the relative position and the interval in the Y direction between the light guide plate 4 (the side surface 12 of the light guide plate 4) and the light source 8 (the light emitting surface 10a of the light source 8) by tips of the pair of protruding parts 16 and 16 abutting against the side wall of the bottom frame 2a or the surface of the substrate 9 that is opposed to the light guide plate 4.

Here, one of the plurality of regions 14 is defined as a first region 14A. Furthermore, among the plurality of regions, the one adjacent to the first region 14A at the center side of the side surface 12 is defined as a second region 14B. In the present embodiment, the second region 14B is offset from the reference plane R1 toward the interior (inside) of the light guide plate 4 relative to the first region 14A. Accordingly, a step 15 is formed between the first region 14A and the second region 14B.

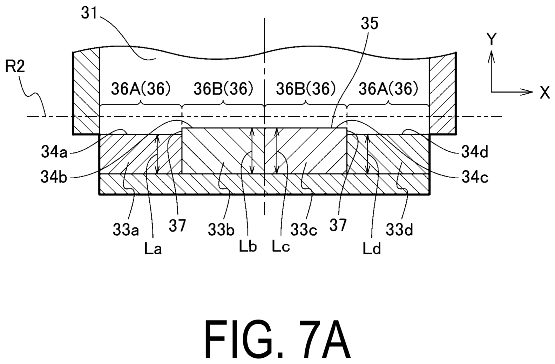

The step 15 is formed by steps 37 formed by a plurality of pieces (cores) (see FIG. 6) that are installed in the mold 30 during injection molding, for example. As described above, the light guide plate 4 is manufactured by injection molding (see FIGS. 7A to 7D). At this time, the density of the molten resin filled in the mold 30 is slightly lower at the corners of the mold 30. Due to this decrease in density, the degree of shrinkage of the molten resin during cooling becomes relatively large at the corners within the mold 30, although it is very slight. As a result, the side surface of the light guide plate 4 has a shape that bulges slightly at the center.

In the present embodiment, an inner wall 35 (see FIG. 7A) having a shape corresponding to the step 15 is provided in the mold 30, and injection molding is performed. The inner wall 35 is formed by using a plurality of pieces (cores) 33a to 33d having different lengths (depths) in the Y direction, for example.

Accordingly, the surface of each region 14 shrinks more toward the inside of the light guide plate 4 as the part of the surface is located more outside in the X direction. As a result, the surface has a shape that bulges outward from the end toward the center side in the X direction so as to approach the reference plane R1. For example, when two second regions 14B are adjacent to each other across the center line C, the surface formed by these regions has a shape that bulges outward toward the center side so as to approach the reference plane R1, using the positions on both sides farthest from the reference plane R1 in the X direction as references.

The number of regions 14 constituting the side surface 12 is not limited to four as illustrated in FIG. 3. The lengths of the regions 14 along the X direction may be the same or different. Furthermore, the surface of the step 15 connecting the first region 14A and the second region 14B may be orthogonal to the X direction or inclined, as long as the surface does not interfere with the formation of minute prisms at the side surface 12 and the optical characteristics.

For convenience of description, FIG. 5 illustrates a part of the side surface 12 from one end part to the center in the X direction. The shape of the remaining side surface 12 is assumed to be symmetrical to the illustrated shape with respect to the center line C indicated by the alternate long and short dash line in FIG. 5.

Table 1 below shows an example of an analysis of the light coupling efficiency between the light source 8 (light emitting element 10) and the side surface 12 of the light guide plate 4 when the interval between the two is changed based on a standard model. In this table, the coupling efficiency is set to 100 when the interval is 0.350 mm.

**Table 1**

| Interval [mm] | Coupling efficiency |
|---|---|
| 0.400 | 98.6 |
| 0.350 | 100.0 |
| 0.300 | 101.3 |
| 0.200 | 103.6 |

As shown in this table, it can be seen that a change of about 0.2 mm results in a change in coupling efficiency of as much as 5%.

Therefore, in the present embodiment, a difference D1 between a distance from the reference plane R1 to a portion P1 of the side surface 12 that is farthest from the reference plane R1 and a distance from the reference plane R1 to a portion P2 that is closest to the reference plane R1 is set to within a predetermined value. In other words, the interval between the portion P1 and the portion P2 along the Y direction is set to within a predetermined value. This value is set according to the tolerance of the coupling coefficient of light between the light emitting element 10 and the side surface 12, and is, for example, 0.1 mm (±0.05 mm). According to Table 1, the coupling efficiency tends to decrease roughly linearly as the interval increases, and by setting the interval between the portion P1 and the portion P2 to within 0.1 mm, the change in coupling efficiency due to differences in the position of the light emitting element 10 can be kept within 3%. That is, it is possible to reduce brightness unevenness.

As illustrated in FIG. 4, the light emitting surface 10a of each light emitting element 10 is located at a position that does not overlap the step 15 when viewed from the Y direction, which is orthogonal to each of the X direction (width direction) and the Z direction (thickness direction). Furthermore, the light emitting surface 10a may be positioned so that the step 15 is located outside the range of the solid angle defined by the directivity angle of the light emitting element 10 when viewed from the Y direction.

According to the present embodiment, the side surface 12, which is the light entrance surface, has a plurality of regions 14 including the above-described steps 15. Furthermore, of the first region 14A and the second region 14B adjacent to each other in the X direction, the second region 14B, which is located relatively closer to the center side of the side surface 12, is offset toward the inside of the light guide plate 4 relative to the first region 14A.

Accordingly, even when the side surface 12 of the light guide plate, which functions as the light entrance surface, tends to bulge near the center of the side surface 12, the variation range of the interval between each light emitting element 10 and the side surface 12 can be narrowed compared to a side surface that is continuous from one end part to the other end part and bulges near the center of the side surface (hereinafter, for convenience, referred to as a side surface according to a comparative example). Therefore, it is possible to make the coupling coefficient of light between each light emitting element 10 and the side surface 12 approach a constant value, and it is possible to reduce brightness unevenness that occurs in the planar illumination device.

The interval between each light emitting element 10 and the side surface 12 is set taking into consideration the thermal expansion of the light guide plate 4. In the case of the side surface according to the comparative example, the interval between each light emitting element 10 and the side surface is smallest near the center of the side surface and largest near the end part. Therefore, the minimum interval between the side surface according to the comparative example and the light emitting element 10 is set to a value such that even if the light guide plate according to the comparative example thermally expands, the central part of the side surface does not come into contact with the light emitting element 10, or even if the central part of the side surface does come into contact with the light emitting element 10, the side surface does not apply excessive pressure. As a result, the interval between the light emitting element 10 and the side surface near the end part becomes excessively large, and there is a likelihood that the light coupling at that portion may become excessively weak.

On the other hand, according to the present embodiment, the difference in the interval between the light emitting element 10 and the side surface 12 can be narrowed between the vicinity of the end part and the vicinity of the center of the side surface 12. Therefore, it is possible to prevent the maximum value of this interval from becoming excessively large, and the degree of difficulty in designing the planar illumination device can be reduced. Furthermore, since the difference in the interval between the light emitting element 10 and the side surface 12 can be narrowed and the entire side surface 12 can be brought closer to the light emitting element 10 (the light source 8), the brightness can be increased or a light emitting element with a lower rated output can be employed. The latter contributes to reducing unnecessary power consumption.

The difference D1 in distance between the portion P1 of the side surface 12 that is farthest from the reference plane R1 and the portion P2 that is closest to the reference plane R1 may be within 0.05 mm. This makes it easier to obtain a light coupling efficiency within an allowable range, and makes it possible to easily avoid the occurrence of brightness unevenness.

### Second Embodiment

Next, a method for manufacturing the light guide plate 4 according to an embodiment will be described. FIG. 6 is a front view of an example of a mold 30 used in the manufacturing method according to the second embodiment. FIGS. 7A to 7D are diagrams illustrating examples of the steps of injection molding using the mold 30 illustrated in FIG. 6.

As illustrated in FIG. 6, the mold 30 is provided with a recessed part 31 to be filled with molten resin. The recessed part 31 has a substantially rectangular cross section that matches the shape of the light guide plate 4. On the other hand, a mating mold (not illustrated) that is placed at top of the mold 30 has an inlet (gate) for a molten resin and a recessed part (not illustrated) that communicates with the inlet and has a shape that includes the shape of the light guide plate 4.

In the present embodiment, the inlet is provided at the center of the side that is opposed to an inner wall 35 (a piece 32a) described later. The inlet may be provided at a side surface that intersects (is orthogonal to) the inner wall 35 (the piece 32a). In this way, the effect of the disclosure can be achieved even when the inlets are provided at the intersecting (orthogonal) side surfaces. This is particularly effective when forming a light guide plate having two opposing side surfaces as light entrance surfaces.

On all four sides of the recessed part 31, pieces (cores) 32 that form the four side surfaces 11 of the light guide plate 4 are disposed. However, of the two pieces 32 that are spaced apart in the Y direction and extend in the X direction, four pieces 33a to 33d are further disposed along the X direction at the piece 32a where the side surface 12 that serves as the light entrance surface is formed. During injection molding, these four pieces 33a to 33d actually form the side surface 12. The piece 32a functions as a base for these.

As illustrated in FIG. 7A, the side surfaces 34a to 34d of the four pieces 33a to 33d form an inner wall 35. During injection molding, the inner wall 35 forms the side surface 12 of the light guide plate 4 as the light entrance surface. In a state where the pieces 33a to 33d are installed in the recessed part 31, the side surfaces 34a to 34d are parallel to the X direction and the Z direction. Also, on each of the side surfaces 34a to 34d, a large number of minute grooves are formed for forming a large number of minute prisms at the side surface 12 of the light guide plate.

The inner wall 35 is divided by the pieces 33a to 33d and includes a plurality of regions 36 arranged in the X direction. The plurality of regions 36 on the inner wall 35 form the plurality of regions 14 on the side surface 12 of the light guide plate. For convenience, one of these regions 36 is defined as a first region 36A and the other as a second region 36B. The second region 36B is adjacent to the first region 36A at the center side of the inner wall 35 in the X direction.

The second region 36B is offset toward the inside of the mold 30 relative to the first region 36A. Accordingly, a step 37 is formed between the first region 36A and the second region 36B. During injection molding, this step 37 forms the step 15 at the side surface 12 of the light guide plate 4. Therefore, if expansion and contraction of the resin is not taken into consideration, the step 37 and the step 15 have the same dimensions.

In the example illustrated in FIG. 7A, the first region 36A of the inner wall 35 is formed by the pieces 33a and 33d. On the other hand, the second region 36B of the inner wall 35 is formed by the pieces 33b and 33c. In order to form the step 37 at the inner wall 35, for example, lengths La and Ld of the pieces 33a and 33d along the Y direction are shorter than lengths Lb and Lc of the pieces 33b and 33c along the same direction.

Here, similarly to the first embodiment, a reference plane R2 illustrated in FIG. 7A is defined. The reference plane R2 is a virtual plane that extends in the X direction and the Z direction and is opposed to the inner wall 35 inside the mold 30. The distance from the reference plane R2 is constant within each of the plurality of regions 36 described above. That is, the side surfaces 34a to 34d of the pieces 33a to 33d are flat surfaces parallel to the reference plane R2, although the distances from the reference plane R2 may vary. For example, the lengths La to Ld of the pieces 33a to 33d are constant regardless of their positions in the X direction. Therefore, since each of the side surfaces 34a to 34d is formed flat regardless of the lengths La to Ld, minute grooves of the same shape for forming the above-described minute prisms can be easily formed without changing the processing conditions.

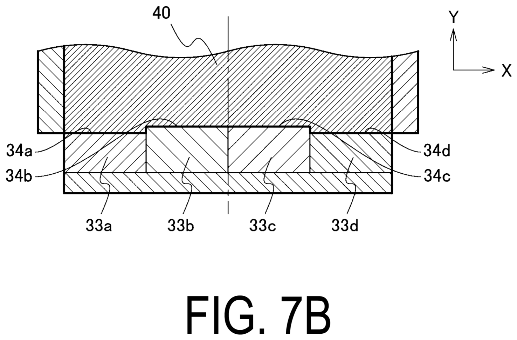

When manufacturing the light guide plate 4, with all of the pieces disposed as illustrated in FIG. 7A, the mold 30 is placed at top of a mating mold, and the molten resin is filled into the recessed part 31 through an inlet (not illustrated) (see FIG. 7B). A predetermined pressure is applied to the resin to be filled, which causes the resin 40 to spread throughout the entire area inside the recessed part 31.

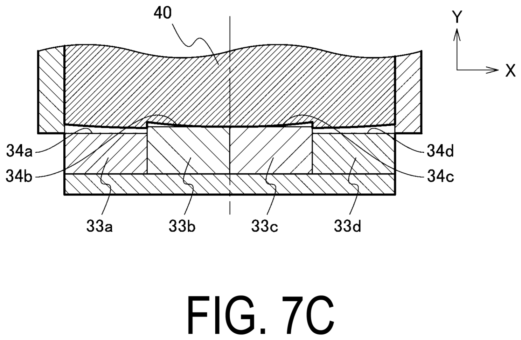

After the resin 40 has spread throughout the entire area inside the recessed part 31, the resin 40 is cooled. The resin 40 hardens as the temperature drops and shrinks slightly. As described above, the density of the molten resin filled in the mold 30 is slightly lower at the corners of the mold 30. Due to this decrease in density, the degree of shrinkage of the molten resin during cooling becomes relatively large at the corners within the mold 30, although it is very slight. As a result, the side surface 12 of the light guide plate 4 has a shape that more bulges in each region 14 as the surface approaches the center of the side surface 12 in the X direction (see FIG. 7C).

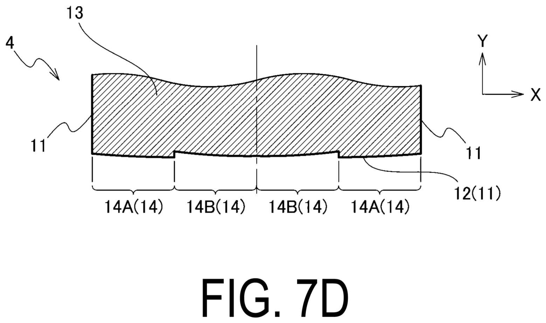

After cooling has progressed, the resin (semi-finished product) that has hardened to a suitable degree is removed from the mold 30 (see FIG. 7D). Thereafter, excess parts of the hardened resin are removed by cutting or the like, and the manufacturing process of the light guide plate 4 is completed. In this way, the light guide plate 4 according to the first embodiment is manufactured.

The inner wall 35 may also be formed as the inner surface of the recessed part 31. In this case, the use of the above-described pieces 33a to 33d is omitted, and a plurality of or many steps 37 and minute grooves for forming a plurality of steps 15 and a large number of minute prisms, respectively, are formed at the side surface 12 of the light guide plate, on the inner surface of the recessed part 31. Furthermore, even when the pieces 33a to 33d are used, the pieces 33b and 33c may be integrated, or all the pieces 33a to 33d may be integrated. Furthermore, recessed parts corresponding to the protruding parts 16 that define the distance between the light source 8 and the light guide plate 4 may be formed at the inner surfaces of the pieces 33a to 33d or the recessed part 31.

According to the manufacturing method of the present embodiment, the light guide plate 4 according to the first embodiment can be manufactured. Furthermore, the light guide plate 4 can be manufactured by using the above-described pieces 33a to 33d in a mold that has been conventionally used. That is, the bulge of the side surface 12 of the light guide plate 4 can be corrected without making any significant changes to the processing technique for the minute prisms or the number of manufacturing steps.

It is possible to take into consideration the bulge that may occur on the side surface 12 and form the side surfaces 34a to 34d of the pieces 33a to 33d into curved surfaces so as to cancel out the bulge. However, when each of the side surfaces 34a to 34d is a curved surface, the degree of difficulty of processing to form the above-described minute grooves at the surface increases. Therefore, the number of processing steps increases, and the manufacturing cost rises. Since the side surface of the piece in the present embodiment is flat, conventional processing techniques (steps) can be employed to form the above-described minute grooves, and the effect of brightness unevenness caused by the bulge of the side surface 12 can be reduced.

While preferred embodiments of the disclosure have been described above, it is to be understood that variations and modifications will be apparent to those skilled in the art without departing from the scope and spirit of the disclosure. The scope of the disclosure, therefore, is to be determined solely by the following claims.

## Claims

1. A light guide plate (4) comprising:
a main surface (13) serving as a light exit surface facing in a thickness direction (Z); and
a side surface (11) serving as a light entrance surface, the light entrance surface being orthogonal to the main surface (13) and extending in a width direction (X),
wherein the side surface (11) includes a plurality of regions (14) aligned in the width direction (X),
when a virtual plane extending in the width direction (X) and the thickness direction (Z) and being opposed to the side surface (11) outside the light guide plate (4) is defined as a reference plane (R1), a surface (12) of each of the regions (14) is curved or inclined in a manner approaching the reference plane (R1) as the surface (12) approaches a center of the side surface (11) in the width direction (X), and
when one of the plurality of regions (14) is defined as a first region (14A) and one of the plurality of regions (14) being adjacent to the first region (14A) at a center side of the side surface (11) is defined as a second region (14B), the second region (14B) is offset from the reference plane (R1) toward an inside of the light guide plate (4) in a manner forming a step (15) with respect to the first region (14A).

2. The light guide plate (4) according to claim 1, wherein a difference between a distance from the reference plane (R1) to a portion (P1) of the side surface (11) farthest from the reference plane (R1) and a distance from the reference plane (R1) to a portion (P2) of the side surface (11) closest to the reference plane (R1) is within 0.1 mm.

3. A planar illumination device (1) comprising:
the light guide plate (4) according to claim 1 or 2; and
a light source (8) including a plurality of light emitting elements (10), the plurality of light emitting elements (10) being disposed at intervals in the width direction (X) and emitting light toward the side surface (11) of the light guide plate (4).

4. The planar illumination device (1) according to claim 3, wherein a light emitting surface (10a) of each of the light emitting elements (10) is located at a position not overlapping the step (15) when viewed from a direction (Y) orthogonal to each of the width direction (X) and the thickness direction (Z).

5. The planar illumination device (1) according to claim 3, wherein a light emitting surface (10a) of each of the light emitting elements (10) is located at the reference plane (R1).

6. A method for manufacturing a light guide plate (4) having a main surface (13) serving as a light exit surface facing in a thickness direction (Z), and a side surface (11) serving as a light entrance surface, the light entrance surface being orthogonal to the main surface (13) and extending in a width direction (X), the method for manufacturing a light guide plate (4) comprising:
performing injection molding by using a mold (30) provided with an inner wall (35) forming the side surface (11),
wherein the inner wall (35) includes a plurality of regions (36) arranged in the width direction (X), and
when one of the plurality of regions (36) is defined as a first region (36A) and one of the plurality of regions (36) adjacent to the first region (36A) at a center side of the inner wall (35) in the width direction (X) is defined as a second region (36B), the second region (36B) is offset toward an inside of the mold (30) relative to the first region (36A) in a manner forming a step (37) between the second region (36B) and the first region (36A).

7. The method for manufacturing a light guide plate (4) according to claim 6, wherein the inner wall (35) is constituted by a plurality of pieces (33a-33d) each forming a respective one of the plurality of regions (36).

8. The method for manufacturing a light guide plate (4) according to claim 6, wherein, when a virtual plane extending in the width direction (X) and the thickness direction (Z) and being opposed to the inner wall (35) inside the mold (30) is defined as a reference plane (R2), the plurality of regions (36) have a distance from the reference plane (R2) being constant within each of the regions (36).
